# EUROPÄISCHE PATENTSCHRIFT

(11) **EP 0 556 687 B1**
(45) Veröffentlichungstag und Bekanntmachung des Hinweises auf die Patenterteilung: **06.12.1995**
(21) Anmeldenummer: 93101952.5
(22) Anmeldetag: 08.02.1993
(51) Int. Cl.: C08B 15/06, C08B 13/00, C08B 31/00, C08F 8/30

(54) **Verfahren zur Herstellung von Aminogruppen enthaltenden Polymeren**
Process for producing amino groups containing polymers
Procédé de préparation de polymères contenant des groupes amine

(30) Priorität: 21.02.1992 DE 4205280
(43) Veröffentlichungstag der Anmeldung: 25.08.1993
(73) Patentinhaber: Wolff Walsrode Aktiengesellschaft, D-29655 Walsrode (DE)
(72) Erfinder: Buysch, Hans-Josef, Dr., W-4150 Krefeld (DE); Szablikowski, Klaus, Dr., W-3030 Walsrode (DE)
(74) Vertreter: Braun, Rolf, Dr.

(56) Entgegenhaltungen:
- EP-A- 0 367 003

## Beschreibung

Vorliegende Erfindung betrifft ein Verfahren zur Herstellung von Aminogruppen enthaltenden Polymeren durch Umsetzung von OH-Gruppen tragenden Polymeren mit Aminourethanen der allgemeinen Formel I 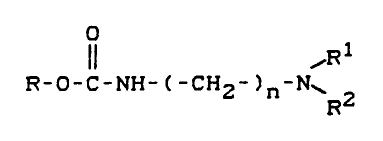
worin
R C₁-C₆-Alkyl, C₅ und C₆-Cycloalkyl, Benzyl, 2-Hydroxyethyl, 2-Hydroxypropyl, Aryl
R¹ und R² gleich oder verschieden und C₁-C₆-Alkyl, C₅ und C₆-Cycloalkyl, Benzyl, 2-Hydroxyethyl, 2-Hydroxypropyl, Cyanethyl, Aryl zusammen mit dem N-Atom einen 5- oder 6-gliedrigen Ring gegebenenfalls mit einem weiteren N- oder O-Atom, n eine ganze Zahl von 0 bis 12 bedeutet.

Es ist bekannt, OH-funktionelle Polymere in solche mit Aminogruppen zu überführen. Die Herstellung dieser Produkte ist bisher nur unbefriedigend gelöst. Die vorgeschlagenen Verfahren führen in der Regel zu sehr niedrigen Substitutionsgraden (DS).

Nach der EP-A 367 003 (siehe auch dort zitierte Literatur) kann man zwar hochsubstituierte Polysaccharide erhalten, jedoch erfordert dies drei nacheinander an isolierten Produkten zu vollziehende polymeranaloge Umsetzungen mit dem entsprechenden Material-, Zeit- und Aufarbeitungsaufwand.

Es wurde nun gefunden, daß OH-funktionelle Polymere auf einfache Weise mit Aminourethanen der Formel I zu Aminogruppen tragenden Polymeren umgesetzt werden können, wobei die Reaktion eindeutig, mit hoher Reagenzausbeute und ohne Mitverwendung von großen Mengen an Hilfsreagenten verläuft.

Geeignete OH-gruppenhaltige Polymere sind z.B. Polyvinylalkohole, Polyacrylate, die unter Verwendung von OH-Gruppen tragenden Monomeren wie β-Hydroxyethyl(meth)-acrylat hergestellt wurden, besonders aber Polysaccharide, Stärke, Dextrine, Glycogen, Polyglucosane wie Cellulose und deren Derivate, z.B. Methylcellulose, Hydroxyethylcellulose, Hydroxypropylcellulose, gemischte Celluloseether wie Methylhydroxyethylcellulosen, Methylhydroxypropyl-cellulose, Sulfoethylcarboxymethylcellulose, Methylsulfoethylcellulose, Hydroxyethylsulfoethylcellulose, Dihydroxypropylcellulose, Dihydroxypropylhydroxyethylcellulose, Dihydroxypropylcarboxymethylcellulose, Carboxymethylcellulose, deren Ester und Salze mit Natrium-, Kalium, Calcium- und Ammoniumionen, Carboxymethylhydroxyethylcellulose, Cellulosesulfat, Polyfructosane wie Inulin und Graninin, Polymannosane, Polygalactosane, auch gemischte Polysaccharide wie Hemicellulosen, ferner Polyxylosane, Polyarabinosane sowie auch Heteropolysaccharide wie Gellan, Xanthan und Pullulan.

Bevorzugt sind Cellulose und ihre Derivate, Stärke und Dextrine, besonders bevorzugt Cellulose, Methylcellulose, Hydroxyethylcellulose, Hydroxypropylcellulose und Stärke.

Geeignete Aminourethane sind solche der Formel I 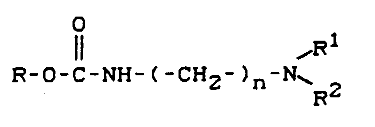
worin
R C₁-C₆-Alkyl, bevorzugte C₁-C₄, besonders bevorzugt Methyl und Ethyl, C₅ n C₆-Cycloalkyl, bevorzugt Cyclohexyl, Benzyl, 2-Hydroxyethyl, 2-Hydroxypropyl, Phenyl, bevorzugt 2-Hydroxyethyl
R¹ und R² gleich oder verschieden sind und gleich R, darüberhinaus Cyanethyl, zusammen mit dem N-Atom einen 5- oder 6-gliedrigen Ring gegebenenfalls mit einem weiteren N- oder O-Atom und n eine ganze Zahl von 0 bis 12 vorzugsweise 2 bis 10 besonders bevorzugt 2 bis 6 bedeutet.

Genannt seien beispielsweise
N-(N,N-Dimethylaminopropyl)-O-phenyl-urethan*
N-(N,N-Diethylaminopropyl)-O-phenyl-urethan*
N-(N,N-Dimethylaminoethyl)-O-phenyl-urethan*
N-(N,N-Dimethylaminopropyl)-O-methyl-urethan*
N-(N,N-Dimethylaminopropyl)-O-ethyl-urethan*
N-(N,N-Dimethylaminopropyl)-O-butyl-urethan*
N-(N,N-Diethylamino-ethyl)-O-(2-hydroxyethyl)-urethan
N-[N,N-Bis-(2-hydroxyethyl)-aminopropyl]-O-methylurethan*
N-[N,N-Bis-(2-hydroxypropyl)-aminoethyl]-O-(2-hydroxyethyl)-urethan
N-(N,N-Dimethylamino-hexyl)-O-phenyl-urethan
N-(N,N-Dimethylamino)-O-phenyl-urethan
N-[N,N-(2-hydroxyethyl)-methylamino]-O-(2-hydroxypropyl)-urethan
N-(N,N-Dimethylaminopropyl)-O-(2-hydroxyethyl)-urethan*
N-(N,N-Dimethylaminopropyl)-O-(2-hydroxyethyl)-urethan*
N-(Piperidino-propyl)-O-phenyl-urethan
N-(Pyrrolidino-propyl)-O-phenyl-urethan
N-(Morpholino-propyl)-O-phenyl-urethan*
N-(Morpholino-propyl)-O-(2-hydroxyethyl)-urethan*
Diese Urethane werden nach an sich bekannten Verfahren hergestellt durch Umsetzung der entsprechenden Kohlensäureester mit primär-tertiären Diaminen gemäß folgender Reaktionsbesiehung: 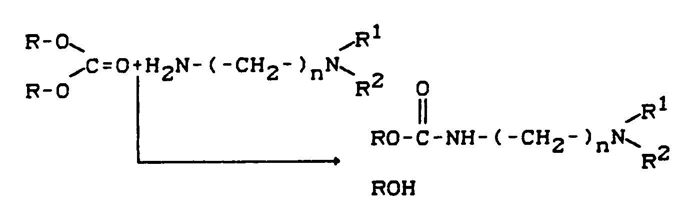
Derartige Umsetzungen sind beschrieben beispielsweise in US-PS 2 802 022 oder EP-A 1 603.
* sind bevorzugt

Die Urethane können in durch Kristallisation oder Destillation gereinigter Form oder als Rohprodukte gegebenenfalls zusammen mit der bei der Bildung aus dem Kohlensäureester entstandenen Hydroxyverbindung in die Umsetzung mit den OH-funktionellen Polymeren eingesetzt werden.

Es ist jedoch auch möglich, die Aminourethane in situ in Gegenwart der OH-funktionellen Polymeren aus den Aminen und Kohlensäureestern zu erzeugen. Dies ist besonders dann von Vorteil, wenn Polysaccharide umgesetzt werden sollen, die vor der Reaktion durch Quellung aufgeschlossen werden müssen, um die OH-Gruppen den Reagentien zugänglich zu machen. Solche Aufschlüsse können vorteilhaft mit Aminen durchgeführt werden (vergleiche Ullmann's Encyclopedia).

Daher kann man die Reaktion mit Polysacchariden so gestalten, daß man zunächst das Polysaccharid mit hinreichenden Mengen des primär-tertiären Diamins behandelt und aufschließt, gegebenenfalls überschüssig eingesetztes Diamin durch Abpressen, Abschleudern, Filtrieren oder Destillieren abtrennt, dann das Polysaccharid der dem darin noch enthaltenen Menge Diamin äquivalenten Menge Kohlensäureester zufügt, die Urethanbildung und schließlich die Umsetzung mit dem Polysaccharid ablaufen läßt.

Die Diamin-Menge beträgt das 0,1 bis 100-fache, vorzugsweise das 0,2 bis 50-fache, besonders das 0,3 bis 30-fache des Gewichtes der Polysaccharidmenge. Die Zeit der Einwirkung hängt vom jeweiligen Polysaccharid ab. Sie dauert von wenigen Minuten bis mehreren Stunden und kann im konkreten Fall durch Vorversuche leicht ermittelt werden.

Die Umsetzung der Aminourethane der Formel I mit den OH-gruppenhaltigen Polymeren erfolgt in Lösung oder Dispersion, wobei die Polysaccharide bevorzugt in Suspension eingesetzt werden, weil sie sehr hochviskose Lösungen bilden, die nur geringe Feststoffgehalte erlauben und damit großen Reaktionsraum und umständliche Aufarbeitung erfordern. Die Umsetzung kann jedoch auch in Abwesenheit von Lösungs- oder Dispersionsmittel erfolgen, wobei die Aminourethane selbst als Reaktionsmedium dienen.

Geeignete Lösungs- und Dispersionsmittel sind inert unter den Reaktionsbedingungen. Genannt seien beispielsweise Kohlenwasserstoffe wie Cyclohexan, Pentan, Heptan, Isooctan, Benzol, Toluol, Halogenkohlenwaserstoffe wie Methylenchlorid, Chloroform, Dichlorethan, Trichlorethylen, Ether wie Diethyl-, Diisopropyl-, Dibutylether, Dioxan, Anisol, Dimethoxyethan, Ester wie Essigsäureethylester, -butylester, Propionsäureethylester, Benzoesäureethylester, Ketone wie Aceton, Methylethylketon, Diethylketon, Methylisopropylketon, Cyclohexanon, Acetophenon, Amide wie Dimethylformamid, Dimethylacetamid, Tetramethylharnstoff, N-Methylpyrrolidon, N-Methylcaprolactam, Nitrile wie Acetonitril, Propionitril, Benzonitril, β-Methoxypropionitril und β-Cyano-β'-methoxy-diethylether.

Die Reaktionstemperatur liegt bei 30 bis 150°C, vorzugsweise bei 40 bis 140°C, bevorzugt 50 bis 130°C.

Die Ausgangsprodukte und Lösungs- beziehungsweise Dispersionsmittel sollten im wesentlichen wasserfrei sein, damit möglichst wenig Nebenreaktionen der Aminourethane mit Wasser erfolgen.

Das OH-gruppenhaltige Polymer wird in der Regel zusammen mit dem Aminourethan im entsprechenden Medium umgesetzt oder das Aminourethan als solches oder auch in Lösungsmittel gelöst zudosiert, wobei sowohl für die polymeranaloge Umsetzung wie das Aminourethan ein und dasselbe Medium verwendet werden kann. Die Reaktionszeit beträgt zwischen 30 min und mehreren Stunden.

Die Umsetzung der Aminourethane mit den OH-funktionellen Polymeren kann mit und ohne Katalysatoren durchgeführt werden. Als Katalysatoren werden die bei Umesterungen oder bei der Urethanbildung aus Isocyanaten und Alkoholen üblicherweise verwendeten Katalysatoren in den vorgeschlagenen Mengen (siehe Houben-Weyl, Bd. E 20, 1604 ff 1987) eingesetzt. Besonders bevorzugte Katalysatoren sind organische Zinnverbindungen wie Dibutylzinndilaurat oder Zinndilaurat, Titanverbindungen wie Titantetrabutylat, Zinkverbindungen wie Zinkacetat, Alkaliverbindungen wie KOH oder K₂CO₃ oder Bleiverbindungen wie Bleiacetat.

Die Molverhältnisse von einer Polymereinheit mit 1 OH-Funktion zu Aminourethanen betragen in der Regel 1:0,1 bis 1:100, vorzugsweise 1:0,5 bis 1:80, besonders bevorzugt 1:0,8 bis 1:50. Während der Reaktion kann die freiwerdende Hydroxyverbindung abdestilliert werden oder im Reaktionsgemisch verbleiben.

Nach der Reaktion des OH-funktionellen Polymeren mit dem Aminourethan der Formel I kann das aminourethanhaltige Polymer isoliert und gereinigt werden oder aber auch direkt weiter umgesetzt werden, beispielsweise mit Alkylierungsmitteln zu Ammoniumverbindungen. Die Isolierung erfolgt durch Filtration oder Zentrifugation aus der Suspension. Gereinigt wird durch Waschen mit dem verwendeten oder anderen Lösungsmitteln, wobei auch Alkohole verwendet werden können, wobei ein Überschuß des eingesetzten Aminourethans gegebenenfalls nicht mehr verwendet werden kann.

Nach dem erfindungsgemäßen Verfahren können OH-funktionelle Polymere mit hohen Substitutionsgraden in einer eindeutig verlaufenden Reaktion mit guten Reagenzausbeuten hergestellt werden.

Aminogruppenhaltige Polymere sind interessant als Ionenaustauscher, als Depots für Arzneimittel und nach Alkylierung zu Ammoniumgruppen tragenden Polymeren als kationische Hilfsmittel für die Papierfabrikation, für die Herstellung hochaktiver Filtermaterialien, die im medizinischen Bereich und in der Nahrungsmittelindustrie Verwendung finden, auch als Zusätze zu hygienischen und kosmetischen Reinigungs- und Pflegemitteln und als Flockungsmittel bei der Abwasserreinigung.

### Beispiel 1

Zu 214 g (1 Mol) Diphenylcarbonat tropfte man bei 80°C in 1 h 102 g (1 Mol) 1-Dimethylaminopropylamin-3, rührte noch 1 h bei 80 bis 90°C und destillierte bei ca. 100°C und 0,4 mbar 91 g Phenol ab. Man erhielt ein praktisch farbloses Produkt (222 g) mit noch einer geringen Verunreinigung durch Phenol, das im NMR-Spektrum die charakteristische starke Urethanbande bei 1741 cm⁻¹ aufwies.

### Beispiel 2

Zu 88 g (1 Mol) Ethylenglykolcarbonat tropfte man bei 50°C in 1 h 102 g (1 Mol) 1-Dimethylaminopropylamin-3 und rührte noch 2 h bei 70°C. Dann war die Umsetzung vollständig. Das farblose Produkt wies im NMR-Spektrum eine starke Urethanbande bei 1700 cm⁻¹ auf. Es konnte unmittelbar für die Reaktion mit OH-funktionellen Polymeren verwendet werden.

### Beispiel 3

Zu 152 g (1 Mol) Methylphenylcarbonat tropfte man bei 80°C in 1 h 88 g (1 Mol) 1-Dimethylaminoethylamin-2, rührte noch 2 h bei 100°C und erhielt ein praktisch farbloses Aminourethan im Gemisch mit Phenol. Umsetzung der Aminourethane im OH-funktionellen Polymeren

### Beispiel 4

100 g einer Hydroxyethylcellulose mit einem DS von 1.1 100 g des Aminourethans aus Beispiel 1 und 0,5 g Desmorapid SO* wurden 5 bis 6 h bei 100 bis 120°C gerührt. Nach mehrmaligem Waschen mit Isopropanol und Trocknen im Vakuum bei 50°C erhielt man 115 g eines Aminogruppen enthaltenden Polysaccharids mit einem N-Gehalt von 4,9 %. und einer Urethanbande bei 1725 cm⁻¹.
* handelsüblicher Zinnkatalysator der Bayer AG für die Umsetzung von Isocyanaten mit Alkoholen

### Beispiel 5

100 g einer Hydroxyethylcellulose mit einem DS von 1,1 500 g des Aminourethans aus Beispiel 2 und 1,0 g Desmorapid SO erhitzte man 4 h auf 100°C und destillierte dann rasch das entstandene Ethylenglykol bei 1 bis 2 mbar und einer Kopftemperatur um 70°C ab. Das Sumpfprodukt wurde noch heiß abgedrückt und mehrmals mit Isopropanol gründlich gewaschen. Man erhielt nach Trocknen im Vakuum bei 50°C 122 g eines Aminopolysaccharids mit einem N-Gehalt von 6,3 %.

### Beispiel 6

Man wiederholte Beispiel 5, setzte als Katalysator statt Desmorapid 2 g Titantetrabutylat zu und erhielt 113 g basisches Polysaccharid mit einem N-Gehalt von 5,4 %.

### Beispiel 7

100 g einer Hydroxyethylcellulose mit einem DS von 1,1 500 g des Aminourethans aus Beispiel 1 und 1,0 g Desmorapid SO wurden 4 h bei 110°C umgesetzt, wobei das entstehende Phenol abdestilliert wurde. Den Rückstand wusch man mehrmals mit Isopropanol, trocknete im Vakuum und erhielt 176 g eines basischen Polysaccharids mit einem N-Gehalt von 10,3 % und einer starken Urethanbande bei 1723 cm⁻¹.

### Beispiel 8

Die Wiederholung von Beispiel 7 mit 800 g Aminourethan und einer Reaktionszeit von 8 h bei 110°C lieferte ein Polysaccharid (197 g) mit einem N-Gehalt von 12,5 %.

### Beispiel 9

Bei Wiederholung von Beispiel 7 mit 600 g Aminourethan und 1,0 g KOH als Katalysator wurde ein Polysaccharid (179 g) mit einem N-Gehalt von 11,1 % erhalten.

### Beispiel 10

Die Wiederholung von Beispiel 7 mit 600 g Aminourethan und 1 g Titantetrabutylat als Katalysator ergab ein basisches Polysaccharid (185 g) mit einem N-Gehalt von 11,7 %.

### Beispiel 11

60 g des basischen Polysaccharids aus Beispiel 7 wurden in 300 ml Toluol suspendiert und dazu in 30 min 60 g Dimethylsulfat getropft. Nach 15 h Rühren bei 30 bis 35°C wurde abgesaugt, mehrmals mit Toluol und Isopropanol gewaschen und getrocknet. Man erhielt ein kationisches, wasserlösliches Polysaccharid (84 g) mit einem N-Gehalt von 6,2 % und einem S-Gehalt von 6,8 %.

## Patentansprüche

1. Verfahren zur Herstellung von Aminogruppen enthaltenden Polymeren, dadurch gekennzeichnet, daß man OH-funktionelle Polymere mit Aminourethanen der allgemeinen Formel I umsetzt, 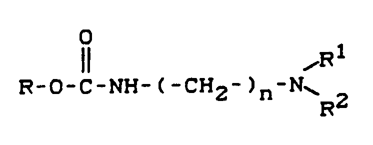 worin
R C₁-C₆-Alkyl, C₅- und C₆-Cycloalkyl, Benzyl, 2-Hydroxyethyl, 2-Hydroxypropyl, Aryl,
R¹ und R² gleich oder verschieden sind und die gleiche Bedeutung wie R haben, und darüberhinaus Cyanethyl, zusammen mit dem N-Atom einen 5- oder 6-gliedrigen Ring gegebenenfalls mit einem weiteren N- oder O-Atom und n eine ganze Zahl von 0 bis 12 bedeutet.

## Claims

1. Process for the production of polymers containing amino groups, characterised in that OH-functional polymers are reacted with aminourethanes of the general formula I 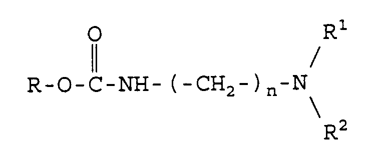 in which
R is C₁-C₆ alkyl, C₅ and C₆ cycloalkyl, benzyl, 2-hydroxyethyl, 2-hydroxypropyl, aryl,
R¹ and R² are identical or different and have the same meaning as R and, in addition, mean cyanoethyl, or together with the N atom represent a 5- or 6-memhered ring optionally with a further N or O atom and n means an integer from 0 to 12.

## Revendications

1. Procédé de production de polymères contenant des groupes amino, caractérisé en ce qu'on fait réagir des polymères porteurs de fonctions OH avec des amino-uréthannes de formule générale I 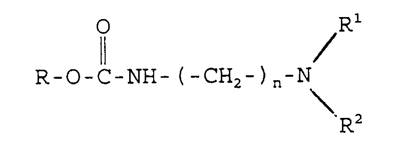 dans laquelle
R est un groupe alkyle en C₁ à C₆, cycloalkyle en C₅ à C₆, benzyle, 2-hydroxyéthyle, 2-hydroxypropyle, aryle,
R¹ et R² sont identiques ou différents et ont la même définition que R, R représente en outre un groupe cyanéthyle, conjointement avec l'atome d'azote à noyau pentagonal ou hexagonal contenant le cas échéant un autre atome de N- ou O-et n est un nombre entier de 0 à 12.
